# EUROPEAN PATENT APPLICATION

(11) **EP 3 536 492 A1**
(43) Date of publication of application: **11.09.2019**
(21) Application number: 18160150.1
(22) Date of filing: 06.03.2018
(51) Int. Cl.: B29D 99/00, B29C 70/34, B29C 70/44, F03D 1/06, B29K 75/00, B29L 31/08, B29K 63/00

(54) **COMPOSITE WIND TURBINE BLADE AND MANUFACTURING METHOD AND APPLICATION THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a composite wind turbine blade, manufacturing method and application thereof. The blade comprises blade shell, shear web, spar cap and blade root, wherein the spar cap is manufactured with polyurethane resin and the blade shell is manufactured with epoxy resin. The present invention contributes to increasing stiffness of the wind turbine blade, making the wind turbine blade lighter and shortening its production cycle, thus saving manufacturing cost thereof.

## Description

### Technical Field

The present invention pertains to the field of wind turbine manufacture, and specifically, it relates to a composite wind turbine blade, and manufacturing method and application thereof.

### Background Art

Wind power is considered as one of the cleanest, most environmentally friendly energy sources presently available, and wind turbines have gained increased attention in this regard.

Conventional wind turbine blade (wind blade for short) is commonly manufactured as follows: manufacturing two halves of the blade through vacuum infusion process; superimposing the two halves of the blade on each other and bonding them together with structural adhesive.

Generally, all the blade parts of wind turbine blade, e.g. spar cap, shear web, blade root and blade shell are made of one resin system reinforced with glass fiber. However, using one resin system has limitation on the performance of wind turbine blade, for example, epoxy resin has limited space to improve mechanical properties and reduce long production cycle, while UPR has high shrinkage and relatively poor mechanical properties.

US 2012/0244006 A1 discloses a method of manufacturing wind turbine blade with polyurethane. However, the pot-life of the polyurethane system disclosed in this patent application is less than 30 minutes which is not suitable for manufacturing large wind turbine blade.

WO 2015/155195 A1 discloses a pultrusion and infusion process, as well as a polyurethane hybrid system which enhances mechanical properties and increases operable time of the resin compared with a conventional polyurethane system.

US 2016/0040651 A1 discloses a method comprising: forming a first spar cap of a rotor blade from a first resin material and infusing a second resin material into a blade shell mold to form a blade shell. The first resin material comprises at least one of polyester or vinyl ester, and the second resin material comprises at least one of epoxy resin, dicyclopentadiene and polyurethane.

However, polyurethane is sensitive to moisture and thus is difficult to be used for manufacturing blade shell which includes balsa wood as core material due to Balsa wood typically contains 8-12 wt% of water. In order to manufacture blade shell with polyurethane resin, balsa wood has to be dried sufficiently to remove the moisture contained therein. Therefore, the production cycle will be much longer than that of conventional wind turbine blade made of epoxy resin.

Accordingly, there is a need for developing a wind turbine blade which may combine the advantages of good mechanical properties of polyurethane with high production efficiency, while avoiding the disadvantage resulted from the fact that polyurethane is sensitive to moisture.

### Summary of the Invention

The present invention aims to provide a wind turbine blade which may combine the advantages of good mechanical properties of polyurethane with high production efficiency, while avoiding the disadvantage resulted from the fact that polyurethane is sensitive to moisture, and application thereof.

Therefore, according to a first aspect of the present invention, there provides a composite wind turbine blade comprising blade shell, shear web, spar cap and blade root, wherein the spar cap is manufactured with polyurethane resin and the blade shell is manufactured with epoxy resin.

According to a second aspect of the present invention, there provides a method for manufacturing the above composite wind turbine blade comprising the following steps:
Forming spar cap with polyurethane resin in combination with optional reinforced material, and forming pre-fabric blade root and shear web optionally with polyurethane resin or epoxy resin in combination with optional reinforced material;
Placing resulting spar cap, pre-fabric blade root and optional reinforced material into a blade shell mold, then infusing epoxy resin into the mold and heating the mold to cure the epoxy resin, thus forming one half of the blade; and
Bonding two halves of the blade with the shear web together to form the wind turbine blade;
When the pre-fabric blade root and/or shear web are manufactured with epoxy resin, the corresponding parts are optionally formed together with the blade shell.

According to a third aspect of the present invention, there provides a wind turbine comprising the above composite wind turbine blade.

The present invention provides the shell of wind turbine blade with a conventional resin system such as epoxy resin and other parts such as spar cap, shear web and blade root by polyurethane resin to increase stiffness of the wind turbine blade, making the wind turbine blade lighter and shorten its production cycle, thus saving manufacturing cost thereof.

### Brief Description of the Figures

The present invention is illustrated hereinafter in combination with the appended figures, in which:
Fig. 1 shows the fatigue resistance testing curve of the resulting sample of Example 1.
Fig. 2 shows the fatigue resistance testing curve of the resulting sample of Example 2.
Fig. 3 shows part of the flow diagram of manufacturing process of wind turbine blade according to one embodiment of the present invention.
Fig. 4 shows schematic diagram of the structure of wind turbine blade according to one embodiment of the present invention.

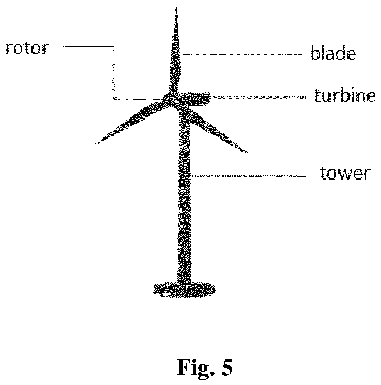

Fig. 5 shows schematic diagram of the structure of wind turbine according to one embodiment of the present invention.

### Detailed description of the Invention

Various aspects of the present invention are described in a detailed manner hereinafter.

According to a first aspect of the present invention, there provides a composite wind turbine blade comprising blade shell, shear web, spar cap and blade root, wherein the spar cap is manufactured with polyurethane resin and the blade shell is manufactured with epoxy resin.

There is no special limitation on the polyurethane resin used in the present invention. The polyurethane resin that may be used in the present invention can generally be obtained by reacting a compound having at least two hydrogen atoms reactive towards isocyanate with diisocyanate and/or polyisocyanate.

Generally, such compounds which carry two or more reactive groups, such as OH groups, SH groups, NH groups, NH₂ groups and CH-acidic groups in the molecule are considered to be used as those having at least two hydrogen atoms reactive towards isocyanate. Preferably, polyether polyols and/or polyester polyols, particularly preferably polyether polyols, are used. Preferably, polyols which have a hydroxyl value of from 200 to 800 mg KOH/g and particularly preferably from 300 to 500 mg KOH/g, are used. The viscosity of the polyols is preferably ≤500 mPas (at 25°C), more preferably ≤300 mPas (at 25°C) and particularly preferably ≤100mPas( 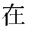 25°C). Preferably, the polyols have at least 60% secondary OH groups, preferably at least 80% secondary OH groups and particularly preferably 90% secondary OH groups. Polyether polyols based on propylene oxide are particularly preferred.

Conventional aliphatic, cycloaliphatic and in particular aromatic di- and/or poly-isocyanates are used as the polyisocyanate component. Examples of suitable polyisocyanates are 1,4-butylene diisocyanate, 1,5-pentane diisocyanate, 1,6-hexamethylene diisocyanate (HDI), isophorone diisocyanate (IPDI), 2,2,4- and/or 2,4,4-trimethylhexamethylene diisocyanate, bis(4,4'-isocyanatocyclohexyl)methane or mixtures thereof with other isomers, 1,4-cyclohexylene diisocyanate, 1,4-phenylene diisocyanate, 2,4- and/or 2,6-toluene diisocyanate (TDI), 1,5-naphthalene diisocyanate, 2,2'- and/or 2,4'- and/or 4,4'-diphenylmethane diisocyanate (MDI) and/or higher homologues (pMDI) thereof, 1,3- and/or 1,4-bis-(2-isocyanato-prop-2-yl)-benzene (TMXDI), 1,3-bis-(isocyanatomethyl)benzene (XDI). Preferably, diphenylmethane diisocyanate (MDI) and, in particular, mixtures of diphenylmethane diisocyanate and polyphenylenepolymethylene polyisocyanate (pMDI) are used as the isocyanate. The mixtures of diphenylmethane diisocyanate and polyphenylenepolymethylene polyisocyanate (pMDI) have a preferred monomer content of from 40 to 100 wt%, preferably from 50 to 90 wt%, particularly preferably from 60 to 80 wt%. The NCO content of the polyisocyanate that is used should preferably be greater than 25 wt%, more preferably greater than 30 wt%, particularly preferably greater than 31.4 wt%. Preferably, the MDI that is used should have a total content of 2,2'-diphenylmethane diisocyanate and 2,4'-diphenylmethane diisocyanate of at least 3 wt%, preferably at least 20 wt%, and particularly preferably at least 40 wt%. The viscosity of the isocyanate should preferably be ≤350 mPas (at 25° C), and particularly preferably ≤200 mPas (at 25° C).

Preferably, in addition to those known reactive components and additives and added ingredients, the polyurethane reaction mixture may preferably further contain fillers such as carbon nanotubes, barium sulfate, titanium dioxide, short glass fibres or natural fibrous or lamellar minerals such as wollastonites or muscovites. Preferably, antifoams, catalysts and latent catalysts are used as additives and added ingredients. Other known additives and added ingredients can further be used, as required.

Suitable polyurethane systems are in particular those which are transparent. Because a low viscosity is necessary for uniform filling of the mold in the production of larger mouldings, polyurethane systems having a viscosity of ≤600 mPas (at 25°C; 60 minutes after mixing of the components), preferably ≤300 mPas, and particularly preferably 200 mPas, are particularly suitable. The reaction ratio between isocyanate component and compounds having at least two hydrogen atoms reactive towards isocyanates is preferably so chosen that the ratio of the number of isocyanate groups to the number of groups reactive towards isocyanate in the reaction mixture is from 0.8 to 1.5, preferably from 0.9 to 1.2, and particularly preferably from 1.0 to 1.1.

The epoxy resins are those that can be used to manufacture wind turbine blade and well known to those skilled in the art, such as RIM 035C and RIM H037 supplied by the company Hexion, needless to describe here in detail.

In one embodiment, the shear web is manufactured with polyurethane resin or epoxy resin.

In one embodiment, the blade root is formed by pre-preparing pre-fabric blade root with polyurethane resin or epoxy resin.

In one preferable embodiment, the spar cap, shear web and pre-fabric blade root are all manufactured with polyurethane resin.

In one embodiment, the blade shell, spar cap, blade root and shear web comprise reinforced material.

The reinforced material is selected from the group consisting of layers of randomly oriented glass fibers, glass fiber fabrics and glass fiber webs, cut or ground glass fibers or mineral fibers, and fiber mats, fiber non-wovens and fiber knitted fabrics based on polymer fiber, mineral fiber, carbon fiber, glass fiber or aramid fiber, and mixtures thereof, preferably glass fiber mats or glass fiber non-woven fabrics.

Preferably, if used, the reinforced material used in the spar cap is uniaxial glass fiber.

Preferably, if used, the reinforced material used in the blade root is triaxial glass fiber.

Preferably, if used, the reinforced material used in the shear web is biaxial glass fiber.

Polyurethane resin has better mechanical properties, in particular compression strength and module, tensile strength and module, shear strength and modules, as well as mechanical properties in 90° fiber direction, as compared with epoxy resin. These properties are critical to the design of wind turbine blade. Through use of polyurethane in the manufacturing of the spar cap, stiffness of the wind turbine blade can be significantly improved and deformation thereof will be reduced, and thus the wind turbine blade design can be further optimized to reduce the weight of blade. This is also true for the pre-fabric blade root. On the other hand, polyurethane resin flow faster and cure faster, and production cycle of the spar cap, shear web and pre-fabric blade root can be reduced more than 30% by using polyurethane resin, thus saving manufacturing cost of the wind turbine blade.

The inventors have surprisingly found that there exists very good interface properties between polyurethane resin and epoxy resin, and the lap shear strength of polyurethane substrate in combination with secondly infused epoxy resin is higher than that of epoxy resin substrate in combination with secondly infused epoxy resin. This makes possible to combine the spar cap, shear web and pre-fabric blade root manufactured with polyurethane resin with the blade shell manufactured with epoxy resin.

In addition, the inventors have surprisingly found that tensile-tensile fatigue of lap shear shows very good dynamic interface properties between polyurethane substrate and epoxy resin substrate.

According to a second aspect of the present invention, there provides a method for manufacturing the above composite wind turbine blade comprising the following steps:
Forming spar cap with polyurethane resin in combination with optional reinforced material, and forming pre-fabric blade root and shear web optionally with polyurethane resin or epoxy resin in combination with optional reinforced material;
Placing resulting spar cap, pre-fabric blade root and optional reinforced material into a blade shell mold, then infusing epoxy resin into the mold and heating the mold to cure the epoxy resin, thus forming one half of the blade; and
Bonding two halves of the blade with the shear web together to form the wind turbine blade;
When the pre-fabric blade root and/or shear web are manufactured with epoxy resin, the corresponding parts are optionally formed together with the blade shell.

Typically, the polyurethane resin and epoxy resin are both prepared on site.

Typically, the reaction mixture comprising the isocyanate component and the compound having at least two hydrogen atoms reactive towards isocyanate is infused into the mold that has been prepared and evacuated beforehand, so as to manufacture corresponding parts.

In one embodiment, the polyurethane resin is prepared with Baydur 78BD085 and Desmodur 44CP20.

In one preferable embodiment, the reaction mixture comprising the isocyanate component and the compound having at least two hydrogen atoms reactive towards isocyanate is infused into the mold at a temperature of 20 to 80°C and particularly preferably of 25 to 40°C.

In one embodiment, after the reaction mixture has been infused, curing the polyurethane resin can be accelerated by heating the mold.

In one preferable embodiment, the infused reaction mixture comprising the isocyanate component and the compound having at least two hydrogen atoms reactive towards isocyanate is cured at a temperature of 40 to 160°C, preferably of 60 to 120°C and particularly preferably of 70 to 90°C.

The method for forming spar cap, pre-fabric blade root, shear web and blade shell may be selected from those commonly used in the processing of wind turbine blade.

For example, spar cap can be manufactured by vacuum infusion process or prepreg process.

Generally, core material will be added during the manufacture of blade shell.

In one embodiment, spar cap, pre-fabric blade root and core material, together with reinforced material, are placed into the blade shell mold.

In one embodiment, the core material may be selected from the group consisting of PVC foam, PET foam, balsa wood, Sareform, Tycor foam, glass fiber reinforced polyurethane foam and the like, such as the balsa wood supplied by 3A Composite Company.

The adhesive used for bonding is selected from those commonly used in the field of wind turbine blade, which is, for example, epoxy resin adhesive or polyurethane adhesive or polyurethane-modified epoxy resin adhesive, such as the epoxy resin adhesive supplied by the company Hexion.

In one embodiment, the polyurethane resin is formed into spar cap together with uniaxial glass fiber.

In one embodiment, the polyurethane resin is formed into shear web together with biaxial glass fiber and core material.

In one embodiment, the polyurethane resin is formed into pre-fabric blade root together with triaxial glass fiber.

In one embodiment, glass fiber reinforcement layer is placed into the blade shell mold, and then the spar cap and/or pre-fabric blade root manufactured previously are placed into the blade shell mold; core material (e.g., balsa wood) is placed on the side of the spar cap and then the glass fiber reinforcement layer is placed on top of the entire laminated structure; after that, release film, separation film, flow mash and vacuum bag are placed respectively, and vacuum is maintained to evacuate air from the laminated structure; upon a complete vacuum is achieved, epoxy resin is infused into the laminated structure immediately; when the laminated structure in the wind turbine blade mold has been completely impregnated with epoxy resin, the mold is heated to cure the epoxy resin to form into one half of blade shell, thus obtaining a first half of the blade.

A second half of the blade is manufactured following the same steps as described above.

The shear web is bonded between the two blade shells with adhesive (e.g., epoxy resin adhesive or polyurethane adhesive or polyurethane-modified epoxy resin adhesive) at the position of the spar cap and thus the two blade shells are bonded together to form the wind turbine blade.

Various molds used in the present invention are selected from those commonly used in the field of wind turbine blade.

According to a third aspect of the present invention, there provides a wind turbine comprising the above composite wind turbine blade.

Unless indicated otherwise, all the technical and scientific terms used herein have the same meanings as those commonly understood by those skilled in the art to which the present invention pertains. In the case that the definition of a term in the specification conflicts with that commonly understood by those skilled in the art to which the present invention pertains, the definition described herein controls.

Unless indicated otherwise, all the numerical values used herein to express the amounts of ingredients, reaction conditions and so on should be understood to be modified by the word "about".

As used herein, the "and/or" means one or all of the elements referred to.

As used herein, the "include" and "comprise" encompass both the cases where only the elements mentioned exist and the cases where other elements that are not mentioned in addition to the elements mentioned exist.

Unless indicated otherwise, all the percentages herein are % by weight.

The present invention is described through examples hereinafter, which are for the purpose of illustration without limitation.

### Examples

### Description of Raw Materials:

Baydur 78BD085: polyol, supplied by Covestro Polymers Company Limited.
Desmodur 44CP20: diisocyanate, supplied by Covestro Polymers Company Limited.
RIM 035C: epoxy resin, supplied by Hexion.
RIM H037: epoxy resin, supplied by Hexion.
Balsa wood: supplied by 3A composite.
TMUD 1200: glass fiber, supplied by Chongqing International Composite Materials Co., LTD.

### Description of Testing Methods:

Lap shear strength is determined with prEN 6060: 1996-4 (Fiber Reinforced Plastics-Testing Method-Lap Shear Strength).

### Example 1: Manufacture of a Laminate with Epoxy Resin substrate in Combination with Epoxy Resin

Into a mold four layers of glass fiber were laid, on top of which were placed separation film, release film and flow mash, successively. The glass fiber was connected to exhaust tube and resin tube at each side and surrounded by sealing rubber strips. The mold was sealed and evacuated with a vacuum bag, while heated at 35°C for 2 hours. 100 parts by weight of RIM 035C and 30 parts by weight of RIM H037 were mixed homogenously at room temperature and vacuum degassed for 5 minutes, before epoxy resin was sucked into the mold through the resin tube. After the glass fiber was completely impregnated with the resin, the exhaust tube was closed and the mold was heated to 80°C for 4 hours. Then heating was stopped and the mold was released upon cooling down to room temperature, thus the epoxy resin substrate was manufactured.

Four layers of glass fiber were laid on the epoxy resin substrate and the above steps were repeated. Then epoxy resin was sucked into the mold and cured at 80°C for 4 hours to obtain the laminate with epoxy resin substrate in combination with epoxy resin. Samples were taken to perform lap shear strength test and fatigue resistance test.

### Example 2: Manufacture of a Laminate with Polyurethane Resin substrate in Combination with Epoxy Resin

Into a mold four layers of glass fiber were laid, on top of which were placed separation film, release film and flow mash, successively. The glass fiber was connected to exhaust tube and resin tube at each side and surrounded by sealing rubber strips. The mold was sealed and evacuated with a vacuum bag, while heated at 35°C for 2 hours. 100 parts by weight of Baydur 78BD085 and 84 parts by weight of Desmodur 44CP20 were mixed homogenously at room temperature and vacuum degassed for 5 minutes, before polyurethane resin was sucked into the mold through the resin tube. After the glass fiber was completely impregnated with the resin, the exhaust tube was closed and the mold was heated to 70°C for 4 hours. Then heating was stopped and the mold was released upon cooling down to room temperature, thus the polyurethane substrate was manufactured.

Four layers of glass fiber were laid on the polyurethane substrate and the above steps were repeated. Then epoxy resin was sucked into the mold and cured at 80°C for 4 hours to obtain the laminate with polyurethane resin substrate in combination with epoxy resin. Samples were taken to perform lap shear strength test and fatigue resistance test.

The following table summarizes the sizes and lap shear strengths of the samples manufactured in Examples 1 and 2.

| **Raw Material** | **Length (mm)** | **Width (mm)** | **Lap Shear Strength (MPa)** |
|---|---|---|---|
| **EP + EP** | 12 | 25.28 | 22.17 |
| | 12 | 24.29 | 26.44 |
| | 12 | 24.48 | 20.45 |
| | 12 | 25.13 | 20.01 |
| | 12 | 25.91 | 24.67 |
| | **Average** | | **23.02** |
| **EP + PU** | 12 | 24.65 | 23.72 |
| | 12 | 24.49 | 26.7 |
| | 12 | 24.17 | 24.79 |
| | 12 | 24.98 | 25.84 |
| | 12 | 24.1 | 19.42 |
| | **Average** | | **24.02** |

The results showed that the lap shear strength of the laminate with polyurethane substrate in combination with secondly infused epoxy resin is better than that of the laminate with epoxy resin substrate in combination with secondly infused epoxy resin.

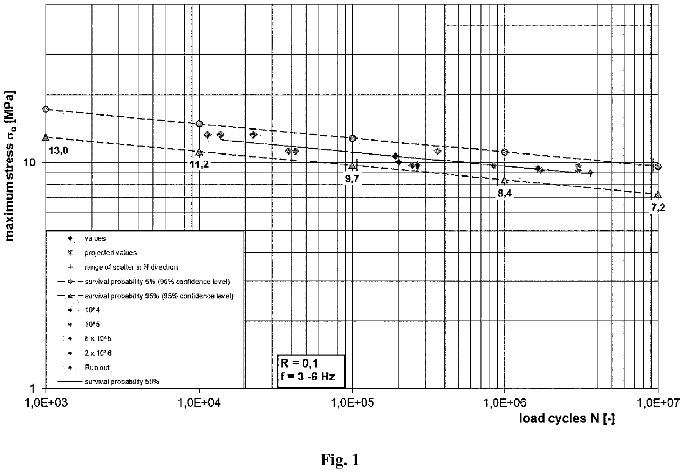

Fig. 1 shows the fatigue testing curve of the samples manufactured in Example 1, from which following results can be obtained:

| | |
|---|---|
| Slope exponent of the S-N-curve | **15.7** |
| σₐ at 10⁶ load cycles (50 % S-N-curve) [MPa] | **9.7** |
| Regression equation (50% S-N-curve) | **y = 23.2·x^{-0.0635}** |
| Coefficient of correlation | **r = -0.913** |
| Quantile factor kₛ (scatter of s unknown) for n =16 | **2.52** |

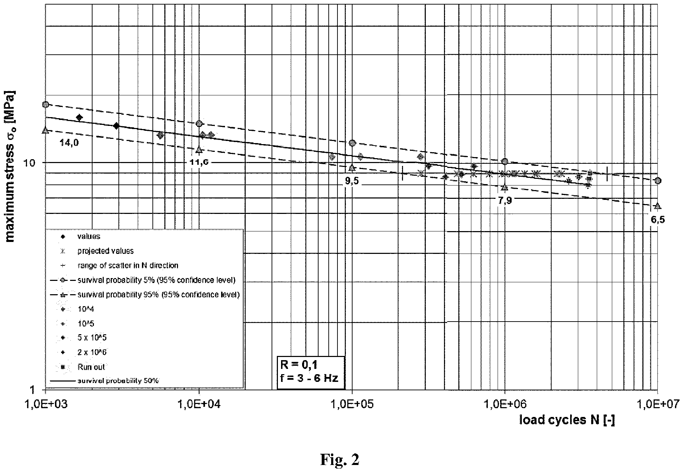

Fig. 2 shows the fatigue testing curve of the samples manufactured in Example 2, from which following results can be obtained:

| | |
|---|---|
| Slope exponent of the S-N-curve | **11.9** |
| σₐ at 10⁶ load cycles (50 % S-N-curve) [MPa] | **8.9** |
| Regression equation (50% S-N-curve) | **y = 28.6·x^{-0.0843}** |
| Coefficient of correlation | **r = -0.976** |
| Quantile factor kₛ (scatter of s unknown) for n =16 | **2,57** |

The results showed that the slope exponent of S-N-curve of the laminate with polyurethane substrate in combination with epoxy resin is 15.7, while that of the laminate with epoxy resin substrate in combination with epoxy resin is 11.9. The results also showed that the maximum stress σₐ at 10⁶ load cycles (50 % S-N-curve) of the laminate with polyurethane substrate in combination with epoxy resin is 9.7 MPa, while that of the laminate with epoxy resin substrate in combination with epoxy resin laminate is 8.9 MPa. These mean that the fatigue resistance of the laminate with polyurethane substrate in combination with epoxy resin laminate is much better than that of the laminate with epoxy resin substrate in combination with epoxy resin laminate.

### Example 3: Manufacture of Wind Turbine Blade

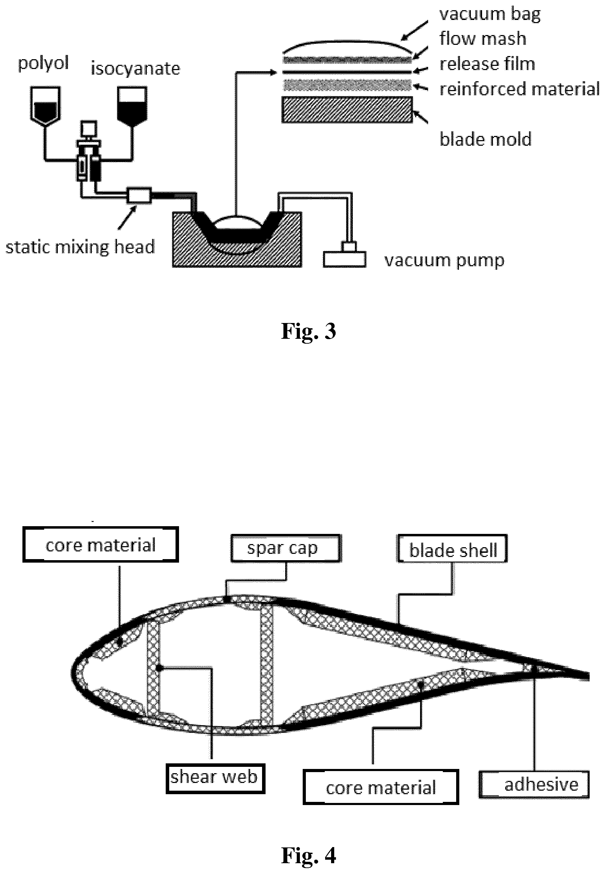

Manufacture of a wind turbine blade according to the present invention is now described referring to Fig. 3 and 4. Into a mold glass fiber and optional other reinforced materials were laid, on top of which were placed separation film, release film and flow mash, successively. The glass fiber was connected to exhaust tube and resin tube at each side and surrounded by sealing rubber strips. The mold was sealed and evacuated with a vacuum bag, while heated at 35°C for 2 hours. 100 parts by weight of Baydur 78BD085 and 84 parts by weight of Desmodur 44CP20 were degassed and mixed homogenously through vacuum infusion device, before polyurethane resin was sucked into the mold through the resin tube. After the glass fiber was completely impregnated with the resin, the exhaust tube was closed and the mold was heated to 70°C for 4 hours. Then heating was stopped and the mold was released upon cooling down to room temperature, and thus the polyurethane spar cap, shear web or pre-fabric blade root were manufactured, with uniaxial glass fiber and triaxial glass fiber used as reinforced material for the spar cap and the pre-fabric blade root, respectively.

The glass fiber reinforcement layer was laid into the blade shell mold, and then the spar cap and pre-fabric blade root manufactured previously were laid into the blade shell mold. Balsa wood was placed on the side of the spar cap and then the glass fiber reinforcement layer was placed on top of the entire laminated structure. Then release film, separation film, flow mash and vacuum bag were placed successively, and vacuum was maintained to evacuate air from the laminated structure. Upon a complete vacuum was achieved, 100 parts by weight of RIM 035C and 30 parts by weight of RIM H037 were infused into the laminated structure immediately. When the laminated structure in the wind turbine blade mold was completely impregnated with epoxy resin, the mold was heated to 80°C for 4 hours, so as to cure the epoxy resin to form into one half of blade.

A second half of the blade was manufactured following the same steps as described above.

The shear web was bonded between the two halves of the blade with epoxy resin adhesive at the position of the spar cap position and then the two halves of the blade were bonded together to form the wind turbine blade.

Although the present invention has been described above regarding the purpose of the present invention, it is to be understood that such a detailed description is merely illustrative. In addition to those that can be defined with Claims, various modifications may be made by those skilled in the art without departing from the spirit and scope of the present invention.

## Claims

1. A composite wind turbine blade comprising blade shell, shear web, spar cap and blade root, wherein the spar cap is manufactured with polyurethane resin and the blade shell is manufactured with epoxy resin.

2. The wind turbine blade according to claim 1, wherein the shear web is manufactured with polyurethane resin or epoxy resin.

3. The wind turbine blade according to claim 1, wherein the blade root is formed by pre-preparing pre-fabric blade root with polyurethane resin or epoxy resin.

4. The wind turbine blade according to any one of claims 1 to 3, wherein the polyurethane resin is obtained by reacting compound having at least two hydrogen atoms reactive towards isocyanate with diisocyanate and/or polyisocyanate.

5. The wind turbine blade according to any one of claims 1 to 3, wherein the blade shell, spar cap, blade root and shear web comprise a reinforced material.

6. The wind turbine blade according to any one of claims 1 to 3, wherein the reinforced material is selected from the group consisting of layers of randomly oriented glass fibers, glass fiber fabrics and glass fiber webs, cut or ground glass fibers or mineral fibers, and fiber mats, fiber non-wovens and fiber knitted fabrics based on polymer fiber, mineral fiber, carbon fiber, glass fiber or aramid fiber, and mixtures thereof.

7. A method for manufacturing the composite wind turbine blade according to any one of claims 1-6 comprising the following steps:
Forming the spar cap with polyurethane resin in combination with optional reinforced material, and forming the pre-fabric blade root and the shear web optionally with polyurethane resin or epoxy resin in combination with optional reinforced material;
Placing the resulting spar cap, the pre-fabric blade root and optional reinforced material into a blade shell mold, then infusing epoxy resin into the mold and heating the mold to cure the epoxy resin, thus forming one half of the blade; and
Bonding two halves of the blade with the shear web together to form the wind turbine blade;
When the pre-fabric blade root and/or the shear web are manufactured with epoxy resin, the corresponding parts are optionally formed together with the blade shell.

8. The method according to claim 7, wherein the corresponding parts are manufactured by infusing a reaction mixture formed by an isocyanate component and a compound having at least two hydrogen atoms reactive towards isocyanate into a mold at a temperature of 20 to 80°C and particularly preferably of 25 to 40°C.

9. The method according to claim 8, wherein the infused reaction mixture is cured at a temperature of 40 to 160°C, preferably of 60 to 120°C and particularly preferably of 70 to 90°C.

10. A wind turbine comprising the composite wind turbine blade according to any one of claims 1-6.
